# EUROPÄISCHE PATENTSCHRIFT

(11) **EP 0 431 455 B1**
(45) Veröffentlichungstag und Bekanntmachung des Hinweises auf die Patenterteilung: **27.07.1994**
(21) Anmeldenummer: 90122715.7
(22) Anmeldetag: 28.11.1990
(51) Int. Cl.: G01N 35/00

(54) **Teststreifenauswertegerät für Mehrfachteststreifen**
Apparatus for evaluating multiple test strips
Dispositif d'évaluation de bandes à essais multiples

(30) Priorität: 05.12.1989 DE 3940152
(43) Veröffentlichungstag der Anmeldung: 12.06.1991
(73) Patentinhaber: BOEHRINGER MANNHEIM GMBH, 68298 Mannheim (DE)
(72) Erfinder: Schäfer, Dieter, W-6905 Schriesheim (DE); Sattler, Stephan, W-8123 Peissenberg (DE); Scheunert, Peter, W-6800 Mannheim (DE); Laufenberg, Franz, W-6718 Grünstadt (DE); List, Hans, W-6901 Lampenhain (DE); Steeg, Klaus, W-7521 Kronau (DE); Serrallach, Eugen, Dr., W-6803 Edingen (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 054 849
- GB-A- 2 014 113
- US-A- 3 578 412
- US-A- 4 689 202

## Beschreibung

Die Erfindung betrifft ein Teststreifenauswertegerät für Mehrfachteststreifen mit einer Transport- und Positioniereinrichtung, von der die Teststreifen quer zu ihrer Längsrichtung von einem Teststreifenzuführbereich entlang einer Transportbahn zu einem Entsorgungsbereich transportiert werden, wobei an der Transportbahn mindestens eine Meßstation mit einer optischen Meßeinheit angeordnet ist, längs der Transportbahn Schienen verlaufen, auf denen die Teststreifen gleiten und mindestens zwei Reihen von in Transportrichtung aufeinanderfolgenden Mitnehmerelementen vorgesehen sind, die synchron miteinander in einem sich periodisch wiederholenden Bewegungsweg derartig angetrieben werden, daß sie die Teststreifen schrittweise transportieren.

Mehrfachteststreifen sind vor allem für die Analyse von Urin gebräuchlich. Sie haben eine Mehrzahl von in gleichem Abstand nebeneinander angeordneten Testfeldern, welche jeweils unterschiedliche Reagenzienkombinationen zur Bestimmung verschiedener Bestandteile der Probe enthalten. Die Teststreifen werden üblicherweise in den Urin kurz eingetaucht. Die Reaktion der Probe mit den Reagenzien führt zu einer optisch nachweisbaren Veränderung, üblicherweise einem Farbumschlag, auf den Testfeldern. Dieser wird visuell oder mit einem entsprechenden Auswertegerät ausgewertet. Geräte zur Auswertung von Teststreifen sind in ihren Eigenschaften auf die Teststreifen eines bestimmten Herstellers abgestimmt. Teststreifen und Auswertegerät bilden ein Teststreifen-Analysesystem.

An Teststreifenauswertegeräte werden hohe Anforderungen gestellt. Die Auswertung der optisch nachweisbaren Veränderung auf den Testfeldern erfolgt üblicherweise reflexionsphotometrisch. Dabei ist die Genauigkeit der Messung in hohem Maße von der exakten Positionierung der Teststreifen in Relation zu der optischen Meßeinheit abhängig. Da die Tendenz zu immer kleineren Testfeldern geht und bei einer genauen Messung nur der mittlere Bereich jedes Testfeldes herangezogen werden kann, müssen schon an die Positionierung in Richtung der Testfeldfläche (Längs- und Querpositionierung des Teststreifens) hohe Anforderungen gestellt werden. Von besonderer Bedeutung ist die exakte Einhaltung des Abstandes zwischen der optischen Meßeinheit und der Testfeldoberfläche (Abstandspositionierung), weil die Genauigkeit der optischen Messung sehr stark von dem genannten Abstand abhängt.

Ein Teststreifenauswertegerät der eingangs bezeichneten Art ist aus der EP-A-174 564 und dem entsprechenden US-Patent 4 689 202 bekannt. Die Schienen sind dort Teil eines sogenanntenn Basistabletts und verlaufen, unterbrochen durch zwei Lesestation-Plattformen (reading station platforms) zwischen einer ersten Vertiefung im Probenzuführbereich und einer zweiten Vertiefung im Entsorgungsbereich.

Das Basistablett weist zwei Längsschlitze auf, durch die als Mitnehmerelemente dienende Stifte von unten her bis über die Schienen durchdringen können. Die Stifte sind Teil eines Teststreifenförderlementes, welches einen bestimmten Weg, nämlich eine geschlossene Kurve in einer vertikalen Ebene (vertical orbital path) durchläuft. Diese Kurve enthält einen horizontal verlaufenden Wegteil, bei dem sich die Stifte in ihrer obersten Position befinden und die Teststreifen transportieren und einen etwa halbkreisförmigen Wegteil, bei dem die Stifte nach Beendigung eines Transportschrittes nach unten weggezogen werden, zurücklaufen und wieder so angehoben werden, daß sie hinter dem jeweils nächsten zu fördernden Teststreifen von unten über die Schienen hinausragen.

Die Genauigkeit der Abstandspositionierung wird bei dem vorbekannten Gerät dadurch gewährleistet, daß die Teststreifen während der Messung auf den Meßplattformen aufliegen und von oben elastisch gegen diese angedrückt werden. Besonderer Wert wird darauf gelegt, daß die Plattformen mindestens im Bereich der Testfelder eine ebene Oberfläche haben. Außerdem muß das Basistablett insgesamt stabil konstruiert und exakt positioniert sein, um die Meßgenauigkeit zu gewährleisten.

Die bekannte Vorrichtung erfüllt die Anforderungen an die Genauigkeit der Messung. Die Konstruktion ist jedoch aufwendig. Außerdem werden mehrere Teile des Gerätes bei der Benutzung von dem Urin verunreinigt. Dies gilt insbesondere für das Basistablett und das Teststreifenförderelement. Beide haben, um ein Weiterfließen des Urins in das Innere des Gerätes zu verhindern, rings um ihre Konturen erhabene Ränder. Dadurch wird der Urin zwar zurückgehalten, sammelt sich jedoch auf den ebenen Flächen der genannten Elemente. Diese müssen daher häufig und gründlich gereinigt werden.

Der Erfindung liegt die Aufgabe zugrunde, ein Teststreifenauswertegerät zur Verfügung zu stellen, bei dem ohne Beeinträchtigung der Meßgenauigkeit eine erleichterte Handhabung erreicht und insbesondere der Aufwand zur Sauberhaltung des Gerätes entscheidend reduziert wird.

Diese Aufgabe wird bei einem Gerät der eingangs bezeichneten Art dadurch gelöst, daß die Schienen als Längsprofilierung in einem disposiblen Transporteinsatz aus einem dünnen Kunststoffmaterial ausgebildet sind, die Mitnehmerelemente von oben her zwischen die Schienen des Transporteinsatzes eingreifen, ein Tragelement für den Transporteinsatz vorgesehen ist, welches den Transporteinsatz in einem zwischen dem Teststreifenzuführbereich und dem Entsorgungsbereich liegenden mittleren Bereich mit einer Unterstützungsfläche unterstützt und an der Meßstation ein starres Andruckelement in einem definierten Abstand zu der optischen Meßeinheit vorgesehen ist, gegen das der Teststreifen bei der Messung von unten her elastisch angedrückt wird.

Der Transporteinsatz ist disposibel, also ein Wegwerfteil zur einmaligen Verwendung. Er läßt sich - vorzugsweise im Tiefziehverfahren - kostengünstig aus einem thermoplastischen Kunststoff, insbesondere Polystyrol, Polypropylen oder Polyvinylchlorid herstellen und deckt den gesamten Transportweg der Teststreifen von dem Teststreifenzuführbereich bis zu dem Entsorgungsbereich nach unten vollständig ab. Dadurch wird eine Verschmutzung des Gerätes durch Urin weitestgehend vermieden.

Dadurch, daß oberhalb der Transportbahn an der Meßstation das starre Andruckelement in definiertem Abstand zu der Meßeinheit vorgesehen ist, wird die Abstandspositionierung mit hoher Genauigkeit gewährleistet, obwohl die Schienen selbst Teil eines aus dünnem Plastikmaterial von vorzugsweise weniger als 0,5 mm Stärke hergestellten Wegwerfteils sind. Beim Andrücken der Teststreifen gegen das starre Andruckelement ist eine gewissen Elastizität des andrückenden Bauteils erforderlich. Bevorzugt ist der Transporteinsatz zwischen dem Teststreifenzuführbereich und dem Entsorgungsbereich durchgehend profiliert, so daß die Schienen im Gegensatz zu dem genannten vorbekannten Gerät auch an der Meßstation durchgehend vorbeilaufen. Dabei ist die Profilgestaltung vorzugsweise so gewählt, daß der Transporteinsatz im Bereich der Meßstation in Richtung senkrecht zu der Transportbahn elastisch deformierbar ist. Die Unterstützungsfläche des Tragelementes ist im Bereich der Meßstation eben. Die notwendige Elastizität beim Andrücken gegen das starre Andruckelement wird durch den Transporteinsatz gewährleistet.

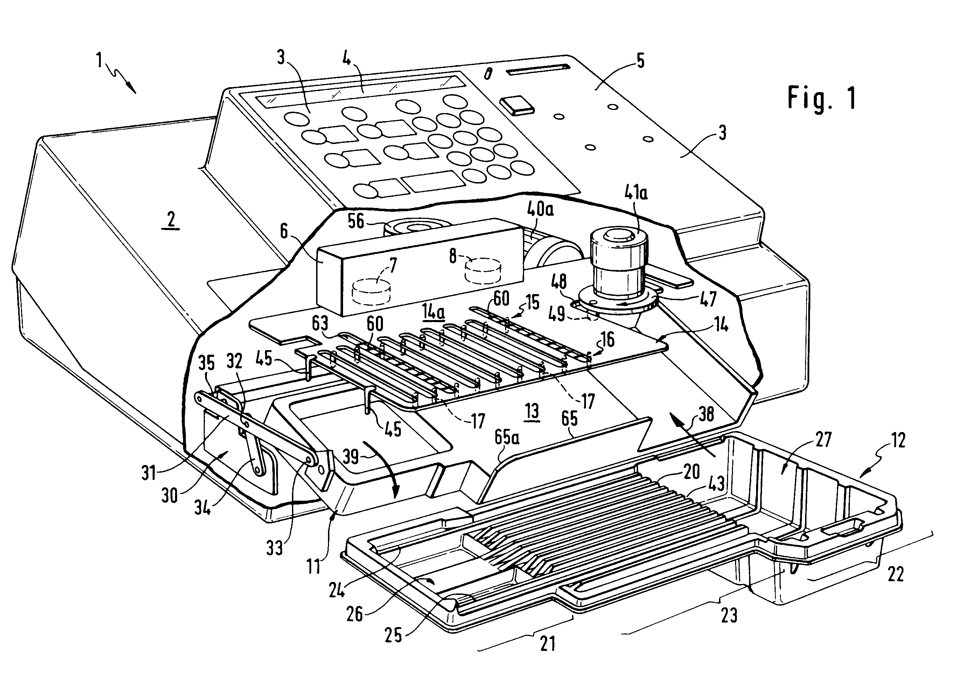

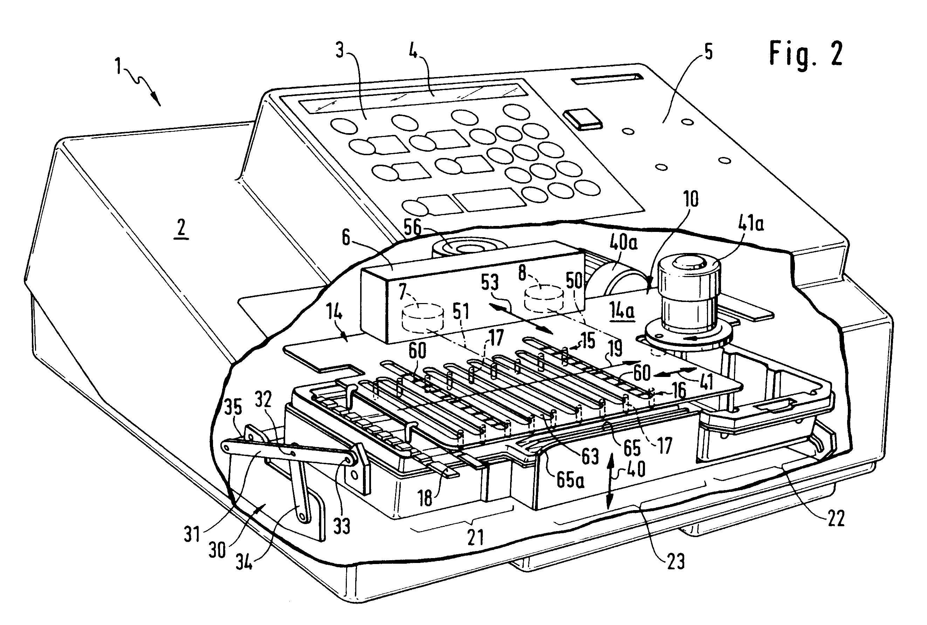

Die Erfindung wird im folgenden anhand eines in den Figuren schematisch dargestellten Ausführungsbeispiels näher erläutert; es zeigen:
- Fig. 1: Ein Teststreifenauswertegerät in perspektivischer, teilweiser aufgeschnittener Darstellung mit herausgenommenem Transporteinsatz;
- Fig. 2: ein Teststreifenauswertegerät wie Fig. 1, jedoch mit eingesetztem Transporteinsatz;
- Fig. 3: eine Aufsicht auf einen Transporteinsatz;
- Fig. 4: einen Querschnitt durch die Transportbahn eines Teststreifenauswertegerätes im Bereich einer Meßstation;
Das in den Figuren 1 und 2 dargestellte Teststreifenauswertegerät 1 hat ein Gehäuse 2 mit einem Bedienungsfeld 3, einer Anzeige 4 und einem Drucker 5. Eine Meßeinrichtung mit einem Meßkopf 6 weist zwei optische Meßeinheiten 7 und 8 und eine nicht dargestellte Meßelektronik auf. Diese Teile können konventionell ausgebildet sein. Sie werden deshalb hier nicht näher beschrieben.

Die Erfindung betrifft im wesentlichen die Merkmale, die die automatische Zufuhr der Teststreifen zu mindestens einer Meßstation, ihre exakte Positionierung an der Meßstation und ihre Entsorgung ermöglichen. Diese sind im Betrieb des Gerätes im wesentlichen von dem Gehäuse 2 abgedeckt, welches in den Figuren aufgeschnitten dargestellt ist.

Die Transport- und Positioniereinrichtung 10 umfaßt ein Tragelement 11 mit einer Unterstützungsfläche 13, einen Transporteinsatz 12 und einen Teststreifenförderer 14 mit zwei Reihen 15,16 von stiftförmigen Mitnehmerelmenten 17.

Die Teststreifen 18 werden quer zu ihrer Längsrichtung entlang einer Transportbahn 19 auf Schienen 20 von einem Teststreifenzuführbereich 21 bis zu einem Entsorgungsbereich 22 transportiert. Die Schienen 20 sind als Längsprofilierung in den Transporteinsatz 12 eingeprägt, wobei in der dargestellten bevorzugten Ausführungsform ein Teil der Schienen, nämlich die Schienen 24 und 25 den gesamten Teststreifenzuführbereich 21 und einen zwischen diesem und dem Entsorgungsbereich 22 liegenden mittleren Bereich 23 durchlaufen, während die übrigen Schienen 20 nur in dem mittleren Bereich 23 vorgesehen sind. In dem Teststreifenzuführungsbereich 21 und in dem Entsorgungsbereich 22 weist der Transporteinsatz 12 jeweils eine nach oben offene trogförmige Vertiefung 26 bzw. 27 auf. Der Trog 26 nimmt herabtropfende überschüssige Probenflüssigkeit auf. Der Trog 27 ist groß genug, um die in einem Arbeitsgang üblicherweise ausgewerteten Teststreifen (beispielsweise 100 Stück) aufzunehmen.

Der Transporteinsatz 12 kann leicht auf das Tragelement 11 aufgesetzt bzw. von diesem abgenommen werden. Zu diesem Zweck ist es zweckmäßig, wenn das Tragelement 11 von dem im dargestellten Fall als Transportplatte 14a ausgebildeten Teststreifenförderer 14 weg nach unten bewegt werden kann. Besonders bevorzugt wird es dabei zugleich, wie in Fig. 1 dargestellt, nach vorne gekippt. Im dargestellten Ausführungsbeispiel wird dies durch eine Mehrgelenkmechanik 30 bewirkt, die aus einem Tragbalken 31, zwei tragelementseitigen Lagern 32,33, einer Stütze 34 und einem hinteren Schwenkhebel 35 besteht. Dem Fachmann sind andere Gestaltungen solcher Bewegungsvorrichtungen, insbesondere mit Hilfe von Servomotoren, Zahnradgetrieben und dgl. geläufig. Wenn das Tragelement 11 nach unten und vorne von dem Teststreifenförderer 14 und damit von den Mitnehmerelementen 17 weggeschwenkt ist, kann der Transporteinsatz 12 leicht in der durch den Pfeil 38 angedeuteten Weise in das Tragelement 11 eingesetzt werden. Dessen Formgebung ist so gestaltet, daß der Transporteinsatz 12 in einer bestimmten Position formschlüssig auf dem Tragelement 11 gehalten wird. Umgekehrt kann der Transporteinsatz, wie durch den Pfeil 39 symbolisiert ist, ebenso leicht entnommen und zusammen mit den in dem Trog 27 enthaltenen verbrauchten Teststreifen entsorgt werden.

Der Transport der Teststreifen von dem Teststreifenzuführbereich 21 zu dem Entsorgungsbereich 22 wird bei der dargestellten bevorzugten Ausführungsform dadurch bewirkt, daß das Tragelement 11 und damit der Transporteinsatz 12 eine periodische Auf- und Abwärtsbewegung (Pfeil 40 in Fig. 2) senkrecht zur Transportbahn 19 macht, während die Mitnehmerlemente 17 eine periodische Hin- und Herbewegung (Pfeil 41 in Fig. 2) parallel zu der Transportbahn 19 machen. Dabei sind beide Bewegungen so gekoppelt, daß der schrittweise Transport der Teststreifen resultiert, wie im folgenden näher erläutert wird.

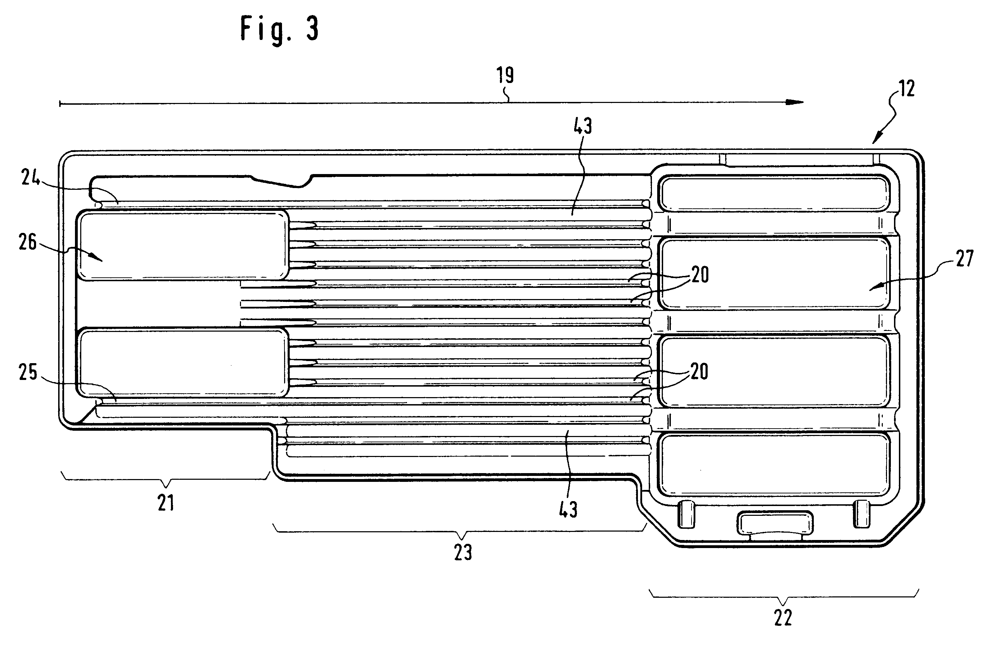

Ein Transportzyklus läuft im einfachsten Fall wie folgt ab:
Beim Anheben des Tragelementes 11 und damit des Transporteinsatzes 12 dringen die Mitnehmerlemente 17 in die Zwischenräume 43 zwischen den Schienen 20 ein. Danach wird der Teststreifenförderer 14 mit den Mitnehmerelementen 17 in Transportrichtung (nach rechts in den Figuren 1 bis 3) bewegt. Dadurch werden sämtliche Teststreifen um einen Schritt weitertransportiert. Als nächstes wird das Tragelement 11 nach unten so weit abgesenkt, daß sich die auf den Schienen aufliegenden Teststreifen 18 unterhalb der Mitnehmerelemente 17 befinden. Nun wird der Teststreifenförderer entgegen der Transportrichtung (in den Figuren nach links) zurückgeführt. Die Bewegungsstrecke der Horizontalbewegung ist geringfügig größer als der Teststreifenabstand in dem mittleren Bereich 23. Beim erneuten Anheben des Tragelementes 11 greifen die Mitnehmerlemente wieder in die Zwischenräume 43 ein. Der Transportzyklus kann von neuem beginnen.

Der Transport von Analyseelementen mit Hilfe vertikal beweglicher Schienen und horizontaler Transportelemente ist aus der US-Patentschrift 3 645 690 bekannt. Bezüglich weiterer Einzelheiten des Transportvorgangs wird auf diese Druckschrift Bezug genommen. Das zugrundeliegende Transportprinzip wird auch als "walking beam" bezeichnet. Im Gegensatz zur vorliegenden Erfindung befindet sich der Förderer mit den horizontal beweglichen Transportelementen bei der US-A-3 645 690 unterhalb der Analyseelemente. Ein disposibler Transporteinsatz ist nicht vorgesehen. Die dort beschriebenen Analyseelemente sind keine Teststreifen. Die analytische Auswertung erfolgt dort transmissionsphotometrisch. Die mit der reflexionsphotometrischen Auswertung verbundenen besonderen Anforderungen an die Positionierungsgenauigkeit bestehen bei der bekannten Einrichtung deshalb nicht.

In einer besonders bevorzugten Ausführungsform wird der Teststreifenförderer 14 nicht nur in dem mittleren Bereich 23 der Transportbahn 20 wie beschrieben zum Transport der Teststreifen verwendet, sondern er dient zugleich dazu, in dem Teststreifenzuführbereich 21 zugeführte Teststreifen gleichmäßig und parallel auszurichten. Dies wird dadurch erreicht, daß in Transportrichtung vor den Reihen 15, 16 der Mitnehmerlemente 17 Ausrichtelemente 45 vorgesehen sind, welche weiter nach unten reichen, als die Mitnehmerlemente 17. Das Tragelement 11 mit dem Transporteinsatz 12 wird bei dieser Ausführungsform zunächst nur bis auf eine mittlere Position angehoben, bei der die längeren Ausrichtelemente 45 bereits unterhalb der Schienen 24, 25 enden und deswegen in den Transportweg der Teststreifen 18 eingreifen, während sich die kürzeren Mitnehmerlemente 17 noch oberhalb von auf den Schienen 20 befindlichen Teststreifen befinden. Die Bewegungsstrecke der Horizontalbewegung des Teststreifenförderers 14 in Transportrichtung (Pfeil 41 nach rechts) ist in diesem Fall insgesamt wesentlich länger (mindestens doppelt so lang) wie der Teststreifenabstand in dem mittleren Bereich 23. In einem ersten Teil dieser Horizontalbewegung wird, während sich das Tragelement 11 in der genannten mittleren Position befindet, ein irgendwo im Teststreifenzuführbereich 21 zugeführter Teststreifen ausgerichtet. Danach wird das Tragelement 11 mit dem Transporteinsatz 12 angehoben, so daß auch die Mitnehmerelemente 17 in die Zwischenräume 43 der Schienen 20 und damit in den Transportweg der Teststreifen eingreifen. Bei dem anschließenden zweiten Teil der Horizontalbewegung des Teststreifenförderers 14 in Transportrichtung wirken die Ausrichtelemente 45 als normale Mitnehmerlemente. Der übrige Transportzyklus läuft wie zuvor beschrieben ab, wobei das Tragelement 11 mit dem Transporteinsatz 12 beim Zurückführen des Förderers 14 so weit abgesenkt wird, daß sich auch die Ausrichtelemente 45 nicht mehr im Transportweg der Teststreifen befinden.

Die beschriebene Bewegung des Tragelementes 11 und des Teststreifenförderers 14 läßt sich mit dem Fachmann geläufigen Mitteln auf verschiedenerlei Weise realisieren. In der Figur dargestellt sind Motoren 40a und 41a, die die Bewegung antreiben. Die Übertragung der Rotationsbewegung der Motoren 40a, 41a in die entsprechende Longitudinalbewegung der Bauteile kann beispielsweise, wie im Falle des Teststreifenförderers 14 dargestellt, mit Hilfe einer Transportscheibe 47 erfolgen, die einen in eine Kulisse 48 eingreifenden Mitnehmer 49 aufweist. Die genannten Bauteile sind beispielsweise mit in den Figuren 1 und 2 nicht dargestellten Gleitführungen auf ihrem Bewegungsweg geführt.

Die Längspositionierung der Teststreifen wird bei der dargestellten bevorzugten Ausführungsform durch eine an dem Tragelement 11 angebrachte seitliche Führungswand 65 bewirkt, die in ihrem vorderen Teil 65a (Fig. 2) schräg auf die Transportbahn 19 zuläuft. Die Enden 18d der Teststreifen 18 stoßen während des Transports gegen die Innenseite 65b der seitlichen Führungswand 65 an, wobei der Teststreifen in eine definierte Längsposition geschoben wird.

Zur reflexionsphotometrischen Auswertung der Farbänderung auf den Testfeldern dienen die optischen Meßeinheiten 7 und 8, die an Meßstationen 50,51 über der Transportbahn 19 in dem mittleren Bereich 23 angeordnet sind. Im dargestellten Fall sind die Meßeinheiten 7 und 8 in einem gemeinsamen Meßkopf 6 integriert, welcher in der durch den Pfeil 53 angedeuteten Weise quer zu der Transportbahn 19 über die Teststreifen 18 beweglich ist. Dadurch können alle Testfelder 18a nacheinander mit jeweils einer Meßeinheit 7,8 pro Meßstation 50,51 vermessen werden. Alternativ könnte jedoch auch, wie bei bekannten Geräten zum Teil üblich, jede Meßeinheit mit einer Mehrzahl von nebeneinander angeordneten optischen Systemen ausgerüstet sein, die die einzelnen Testfelder vermessen.

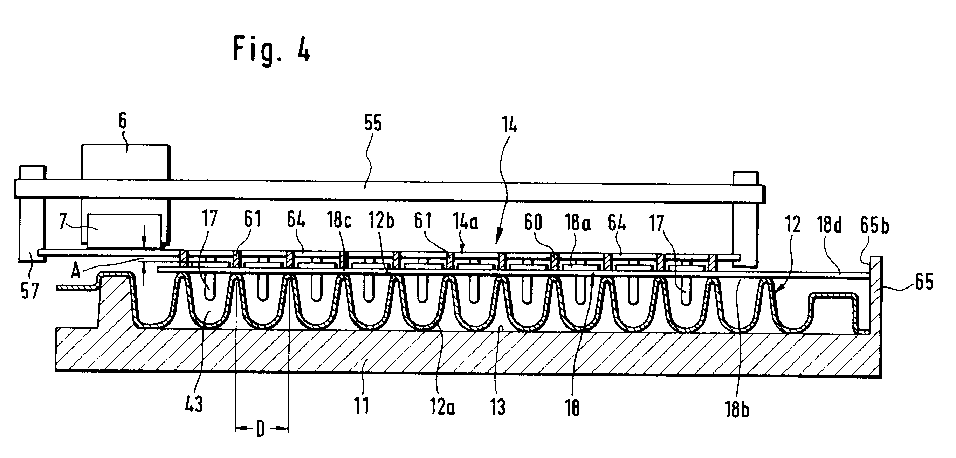

Figur 4 zeigt einen Schnitt durch die Meßstation 50. Der Meßkopf 6 mit der optischen Meßeinheit 7 ist an einer (in den Figuren 1 und 2 nicht dargestellten) Führungsschiene 55 geführt. Der Antrieb erfolgt mit einem Motor 56 (Fig. 1 und 2), wobei die Kraftübertragung beispielsweise mit einem in den Figuren nicht dargestellten Zahnriemenantrieb erfolgen kann.

Für die Genauigkeit der Messung ist wie oben dargelegt von großer Bedeutung, daß der Abstand A zwischen der optischen Meßeinheit 7 und den Testfeldern 18a auf dem Teststreifen 18 exakt und für jeden Teststreifen gleich definiert ist. Dies wird bei der Erfindung wie erwähnt dadurch erreicht, daß die Teststreifen an der Meßstation von ihrer Unterseite 18b her gegen ein starres Andruckelement 60 elastisch angedrückt werden, welches sich in einem definierten Abstand zu der optischen Meßeinheit befindet.

Bei der dargestellten bevorzugten Ausführungsform ist an dem als Transportplatte 14a ausgebildeten Teststreifenförderer 14 ein leiterförmiges Andruckelement 60 mit einer Mehrzahl von in Transportrichtung verlaufenden Stäben 61 vorgesehen, die so angeordnet sind, daß sie beim Andrücken des Teststreifens 18 zwischen dessen Testfeldern 18a verlaufen. Die Stäbe verlaufen, wie in den Figuren 1 und 2 zu erkennen ist, quer über in der Transportplatte 14a vorgesehene Schlitze 63 und trennen rechteckige Fenster 64 voneinander, durch welche die optische Messung erfolgt. Der definierte Abstand zwischen der optischen Meßeinheit 7 und dem Andruckelement 60 wird dadurch sichergestellt, daß die Transportplatte 14a und die Führungsschiene 55 an einem gemeinsamen Rahmen 57 befestigt sind.

Die Teststreifen werden elastisch gegen die starren Andruckelemente 60 angedrückt. Vorzugsweise ist der Transporteinsatz 12 im Bereich der Meßstationen 50,51 so gestaltet, daß er in Richtung senkrecht zur Transportbahn 19 (also in Richtung auf die Teststreifenunterseite 18b) elastisch deformierbar ist. Dies läßt sich insbesondere dadurch erreichen, daß die eingeprägten Schienen 20 (im Gegensatz zu der vorbekannten Vorrichtung gemäß EP-A 174 564 und US-A 4 689 202) durchgehend verlaufen und etwa wellenförmig geformt sind. Dabei ist es besonders vorteilhaft, wenn die Rundungen 12a an der auf dem Tragelement 11 aufliegende Unterseite des Transporteinsatzes 12 weniger scharf gerundet sind, als die Rundungen 12b an der Oberseite des Transporteinsatzes, auf welchen die Teststreifen 18 gleiten.

Auch die Materialstärke des Transporteinsatzes ist in diesem Zusammenhang von Bedeutung. Sie sollte bevorzugt weniger als 0,5 mm betragen und besonders bevorzugt zwischen 0,15 und 0,3 liegen.

Die Unterstützungsfläche 13 des Tragelementes 11, auf der der Transporteinsatz 12 in dem mittleren Bereich 23 mit seiner Unterseite aufliegt, ist in diesem Fall eben, um den Transporteinsatz 12 möglichst gleichmäßig zu unterstützen. Dabei muß die ebene Oberfläche selbstverständlich nicht ununterbrochen sein. Um ein gleichmäßiges Andrücken auf der gesamten Länge der Teststreifen 18 zu gewährleisten ist es vorteilhaft, wenn das Tragelement 11 um ein Achse parallel zur Transportbahn 19 schwenkbar gelagert ist.

Der Abstand D der Schienen 20 ist vorzugsweise ein Vielfaches des Testfeldabstandes der Teststreifen 18. Besonders bevorzugt ist der Abstand der Schienen D ebenso groß wie der Testfeldabstand. Die Teststreifen sind auf der Transportbahn so geführt, daß - wie in Figur 4 dargestellt - die zwischen den Testfeldern liegenden Abschnitte 18c auf den Schienen gleiten. Obwohl - im Gegensatz zu dem, was der Fachmann der US-PS-A-4 689 202 entnimmt - die Teststreifen 18 in diesem Fall unterhalb ihrer Testfelder 18a überhaupt nicht unterstützt sind, läßt sich dabei eine hochpräzise Abstandspositionierung erreichen. Zugleich führt diese Anordnung der Schienen dazu, daß die sogenannte "Verschleppung" der Probe, also die Übertragung von geringen Probenmengen über die Schienen von einem Teststreifen auf einen anderen, minimiert wird.

## Patentansprüche

1. Teststreifenauswertegerät für Mehrfachteststreifen (18) mit
einer Transport- und Positioniereinrichtung (10), von der die Teststreifen (18) quer zur ihrer Längsrichtung von einem Teststreifenzuführbereich entlang einer Transportbahn (19) zu einem Entsorgungsbereich (22) transportiert werden,
wobei an der Transportbahn (19) mindestens eine Meßstation (50,51) mit einer optischen Meßeinheit (7,8) angeordnet ist,
längs der Transportbahn (19) Schienen (20) verlaufen, auf denen die Teststreifen (18) gleiten und
mindestens zwei Reihen (15,16) von in Transportrichtung aufeinanderfolgenden Mitnehmerelementen (17) vorgesehen sind, die synchron miteinander in einem sich periodisch wiederholenden Bewegungsweg derartig angetrieben werden, daß sie die Teststreifen (18) schrittweise transportieren,
**dadurch gekennzeichnet,** daß
die Schienen (20) als Längsprofilierung in einem disposiblen Transporteinsatz (12) aus einem dünnen Kunststoffmaterial ausgebildet sind,
die Mitnehmerlemente (17) von oben her zwischen die Schienen (20) des Transporteinsatzes (12) eingreifen, ein Tragelement (11) für den Transporteinsatz (12) vorgesehen ist, welches den Transporteinsatz (12) in einem zwischen dem Teststreifenzuführbereich (21) und dem Entsorgungsbereich (22) liegenden mittleren Bereich (23) mit einer Unterstützungsfläche (13) unterstützt und
an der Meßstation ein starres Andruckelement (60) in einem definierten Abstand (A) zu der optischen Meßeinheit (7,8) vorgesehen ist, gegen das der Teststreifen (18) bei der Messung von unten her elastisch angedrückt wird.

2. Teststreifenauswertegerät nach Anspruch 1, **dadurch gekennzeichnet,** daß der Transporteinsatz (12) aus einem thermoplastischen Kunststoff, insbesondere Polystyrol besteht.

3. Teststreifenauswertegerät nach einem der vorhergehenden Ansprüche, **dadurch gekennzeichnet,** daß die Wandstärke des Transporteinsatzes (12) weniger als 1mm, bevorzugt weniger als 0,5 mm, besonders bevorzugt zwischen 0,15 mm und 0,3 mm beträgt.

4. Teststreifenauswertegerät nach einem der vorhergehenden Ansprüche, **dadurch gekennzeichnet,** daß die Schienen (20) auch an der Meßstation (50,51) durchgehend vorbeilaufen.

5. Teststreifenauswertegerät nach Anspruch 4, **dadurch gekennzeichnet,** daß die Schienen (20) in dem Transporteinsatz (12) so profiliert sind, daß der Transporteinsatz (12) im Bereich der Meßstation (50,51) in Richtung senkrecht zu der Transportbahn (19) elastisch deformierbar ist und die Unterstützungsfläche (13) des Tragelementes (12) im Bereich der Meßstation (50,51) eben ist.

6. Teststreifenauswertegerät nach einem der vorhergehenden Ansprüche, **dadurch gekennzeichnet,** daß der Transporteinsatz (12) im Teststreifenzuführbereich (21) und im Entsorgungsbereich (22) jeweils einen nach oben offenen Trog (26,27) aufweist.

7. Teststreifenauswertegerät nach einem der vorhergehenden Ansprüche, **dadurch gekennzeichnet,** daß die Schienen (20) einen Abstand (D) haben, der ein Vielfaches des Testfeldabstandes der Teststreifen (18) ist und die Teststreifen (18) auf der Transportbahn (19) so geführt sind, daß die zwischen den Testfeldern (18a) liegenden Abschnitte (18c) der Teststreifen (18) auf den Schienen (20) gleiten.

8. Teststreifenauswertegerät nach einem der vorhergehenden Ansprüche, **dadurch gekennzeichnet,** daß das an der Meßstation (50,51) vorgesehene Andruckelement (60) an einem Teststreifenförderer (14) befestigt ist, an dem auch die Mitnehmerlemente (17) befestigt sind.

9. Teststreifenauswertegerät nach einem der vorhergehenden Ansprüche, **dadurch gekennzeichnet,** daß das Andruckelement (60) als Mehrzahl von in Transportrichtung verlaufenden Stäben (61) aufweist, die so angeordnet sind, daß sie beim Andrücken des Teststreifens (18) zwischen den Testfeldern (18a) verlaufen.

10. Teststreifenauswertegerät nach einem der vorhergehenden Ansprüche, **dadurch gekennzeichnet,** daß das Tragelement (11) eine periodische Auf- und Abwärtsbewegung (40) senkrecht zu der Transportbahn (19) macht, die Mitnehmerlemente (17) eine periodische Hin- und Herbewegung (41) parallel zu der Transportbahn (20) machen und beide Bewegungen so gekoppelt sind, daß der schrittweise Transport der Teststreifen (18) resultiert.

11. Teststreifenauswertegerät nach einem der vorhergehenden Ansprüche, **dadurch gekennzeichnet,** daß zur Positionierung der Teststreifen in deren Längsrichtung ein seitliches Führungselement (65) mit einem schräg auf die Transportbahn (19) zulaufenden vorderen Teil (65a) vorgesehen ist, welches nicht Bestandteil des Transporteinsatzes (12) ist.

## Claims

1. Test strip evaluating instrument for multiple test strips (18) with
a transport and positioning device (10) by means of which the test strips (18) are transported at right angles to their longitudinal direction from a test strip feed area along a transport path (19) to a disposal area (22),
in which at least one measuring station (50, 51) with an optical measuring unit (7, 8) is arranged on the transport path (19),
rails (20), on which the test strips (18) slide, run along the transport path (19) and
at least two rows (15, 16) of cam elements (17) following one another in the transport direction are provided, which are driven synchronously with one another in a periodically recurring movement path in such a way that they transport the test strips (18) step-wise,
characterized in that
the rails (20) are designed as longitudinal profiling in a disposable transport insert (12) made of a thin plastics material,
the cam elements (17) engage from above between the rails (20) of the transport insert (12),
a bearing element (11) is provided for the transport insert (12) which supports the transport insert (12) with a support surface (13) in a central area (23) lying between the test strip feed area (21) and the disposal area (22), and
a rigid contact-pressure element (60), against which the test strip (18) is pressed elastically from below during the measurement, is provided at the measuring station, at a defined distance (A) from the optical measuring unit (7, 8).

2. Test strip evaluating instrument according to claim 1, characterized in that the transport insert (12) is made of a thermoplastic plastics material, in particular polystyrene.

3. Test strip evaluating instrument according to any one of the abovementioned claims, characterized in that the wall thickness of the transport insert (12) is less than 1 mm, preferably less than 0.5 mm, Particularly preferably between 0.15 mm and 0.3 mm.

4. Test strip evaluating instrument according to any one of the abovementioned claims, characterized in that the rails (20) also run continuously past the measuring station (50, 51).

5. Test strip evaluating instrument according to claim 4, characterized in that the rails (20) are so profiled in the transport insert (12) that the transport insert (12) is elastically deformable in the area of the measuring station (50, 51) in a direction normal to the transport path (19) and the support surface (13) of the bearing element (12) is plane in the area of the measuring station (50, 51).

6. Test strip evaluating instrument according to any one of the abovementioned claims, characterized in that the transport insert (12) comprises in the test strip feed area (21) and in the disposal area (22) a trough (26, 27).

7. Test strip evaluating instrument according to any one of the abovementioned claims, characterized in that the distance (D) between the rails (20) is a multiple of the test field spacing of the test strips (18) and the test strips (18) are so guided on the transport path (19) that those sections (18c) of the test strips (18) lying between the test fields (18a) slide on the rails (20).

8. Test strip evaluating instrument according to any one of the abovementioned claims, characterized in that the contact-pressure element (60) provided on the measuring station (50, 51) is fixed to a test strip conveyor (14) to which the cam elements (17) are also fixed.

9. Test strip evaluating instrument according to any one of the abovementioned claims, characterized in that the contact-pressure element (60) consists of a plurality of pegs (61) running in the transport direction, which are arranged so that they lie between the test fields (18a) when pressing on the test strip (18).

10. Test strip evaluating instrument according to any one of the abovementioned claims, characterized in that the bearing element (11) makes a periodic up and down movement (40) normal to the transport path (19), the cam elements (17) make a periodic to and fro movement (41) parallel to the transport path (20) and both movements are so coupled that step-wise transport of the test strips (18) results.

11. Test strip evaluating instrument according to any one of the abovementioned claims, characterized in that for the positioning of the test strips in their longitudinal direction a lateral guide element (65) with a front part (65a) impinging obliquely onto the transport path (19) is provided, said front part not forming part of the transport insert (12).

## Revendications

1. Dispositif d'évaluation de bandes portant des tests multiples (18), comportant
- une installation de transport et de positionnement (10), par laquelle les bandes de tests multiples (18) sont transportées, perpendiculairement à leur direction longitudinale, depuis une zone d'alimentation des bandes de tests, le long d'une voie de transport (19), vers une zone d'évacuation (22),
- étant entendu que, sur la voie de transport (19), est disposée au moins une station de mesure (50, 51), comportant une unité de mesure optique (7, 8),
- le long de la voie de transport (19), sont disposés des rails (20), sur lesquels glissent les bandes de tests (18), et
- au moins des rangées (15, 16) d'éléments d'entraînement (17), se suivant les uns les autres dans le sens du transport, sont prévues, ces rangées d'éléments étant entraînées de façon synchrône les unes avec les autres, suivant une course de déplacement se répétant suivant une période, de façon à ce qu'elles transportent les bandes de tests (18) en effectuant des pas successifs,
caractérisé en ce que
- les rails (20) sont réalisés sous la forme de profilés tracés longitudinalement dans un bac-tiroir de transport (12), inséré à sa place et constitué d'un matériau fin, en matière plastique,
- en ce que les éléments d'entraînement (17) pénètrent, depuis le haut, entre les rails (20) du bac-tiroir de transport (12),
- en ce qu'il est prévu, pour le bac-tiroir de transport (12), un organe support (11), supportant, avec une surface support (13), le bac-tiroir de transport (12) dans une zone (23) située au milieu entre la zone d'alimentation (21) des bandes de tests et la zone d'évacuation (22), et
- en ce qu'il est prévu, sur la station de mesure, un organe rigide d'application (60), à une distance définie (A) par rapport à l'unité de mesure (7, 8), la bande de tests (18) étant maintenue appuyée élastiquement, depuis le bas, contre lui, pendant la mesure.

2. Dispositif d'évaluation de bandes de tests suivant la revendication 1, caractérisé en ce que le bac-tiroir de transport (12) est constitué d'une matière plastique thermoplastique, en particulier de polystyrol.

3. Dispositif d'évaluation de bandes de tests suivant l'une quelconque des revendications précédentes, caractérisé en ce que l'épaisseur de paroi du bac-tiroir de transport (12) est inférieure à 1 mm, de préférence inférieure à 0,5 mm, et plus particulièrement entre 0,15 et 0,3 mm.

4. Dispositif d'évaluation de bandes de tests suivant l'une quelconque des revendications précédentes, caractérisé en ce que les rails (20) passent également devant la station de mesure (50, 51).

5. Dispositif d'évaluation de bandes de tests suivant la revendication 4, caractérisé en ce que les rails (20) dans le bactiroir de transport (12) ont un profil tel que le bac-tiroir de transport (12), dans la zone de la station de mesure (50, 51), puisse se déformer élastiquement dans la direction perpendiculaire à la voie de transport (19), et que la surface support (13) du bac-tiroir de transport (12) soit plane dans la zone de la station de mesure (50, 51).

6. Dispositif d'évaluation de bandes de tests suivant l'une quelconque des revendications précédentes, caractérisé en ce que le bac-tiroir de transport (12) présente, dans la zone d'alimentation (21) des bandes de tests et dans la zone d'évacuation (22), chaque fois un bac (26, 27), ouvert vers le haut.

7. Dispositif d'évaluation de bandes de tests suivant l'une quelconque des revendications précédentes, caractérisé en ce que les rails (20) sont à une distance (D) qui est un multiple de la distance des champs de test des bandes de tests (18), et en ce que les bandes de tests (18) sont guidées sur la voie de transport (19) de telle façon que les parties (18c) des bandes de tests (18), situées entre les champs de tests (18a), glissent sur les rails.

8. Dispositif d'évaluation de bandes de tests suivant l'une quelconque des revendications précédentes, caractérisé en ce que l'organe d'application (60) prévu à la station de mesure (50, 51) est fixé sur un transporteur (14) des bandes de tests, sur lequel sont également fixés les éléments d'entraînement (17).

9. Dispositif d'évaluation de bandes de tests suivant l'une quelconque des revendications précédentes, caractérisé en ce que l'organe d'application (60) se présente comme une quantité importante de tiges (61), dirigées dans le sens de transport, et disposées de telle façon que, lors de l'application de la bande de tests (18), elles passent entre les champs de tests (18a).

10. Dispositif d'évaluation de bandes de tests suivant l'une quelconque des revendications précédentes, caractérisé en ce que l'organe support (11) effectue un mouvement périodique (40) vers le haut et vers le bas perpendiculairement à la voie de transport (19), en ce que les éléments d'entraînement (17) effectuent un mouvement périodique de va-et-vient (41) parallèlement à la voie de transport (20), et en ce que ces deux mouvements sont coordonnés de telle façon qu'il en résulte un transport pas à pas des bandes de tests (18).

11. Dispositif d'évaluation de bandes de tests suivant l'une quelconque des revendications précédentes, caractérisé en ce que, pour positionner les bandes de tests suivant leur direction longitudinale, il est prévu un organe de guidage latéral (65), comportant une partie avant (65a) dirigée inclinée par rapport à la voie de transport (19), partie qui n'est pas une pièce constituante du bac-tiroir de transport (12).
